# EUROPEAN PATENT APPLICATION

(11) **EP 4 818 516 A1**
(43) Date of publication of application: **07.10.2026**
(21) Application number: 25168177.1
(22) Date of filing: 03.04.2025
(51) Int. Cl.: F03D 13/10, F03D 80/50

(54) **METHOD OF SERVICING A COMPONENT OF A WIND TURBINE**

(71) Applicant: Siemens Gamesa Renewable Energy A/S, 7330 Brande (DK)
(72) Inventor: Theisen, Soeren Henneberg, 7430 Ikast (DK); Troelsen, Henrik Jason, 7400 Herning (DK); Jensen, Martin Bjerregaard, 7451 Sunds (DK)
(74) Representative: SGRE-Association

(57) **Abstract**

A method of servicing a component of a wind turbine is provided. The component is located in a space that is at least partly confined by a rotor blade of the wind turbine.

The method comprises bringing the rotor blade into a vertical position pointing upwards by rotating a rotor hub of the wind turbine; transporting a crane through an opening in a separation wall between the hub and the space; positioning the crane on the separation wall; and servicing the component using the crane.

## Description

### FIELD OF THE INVENTION

The present invention relates to a method of servicing a component of a wind turbine. It further relates to a wind turbine.

### BACKGROUND

Wind turbine rotor blades are becoming increasingly larger. This makes installation of a rotor blade on the hub of the wind turbine more difficult. Alignment aids may be provided to facilitate installation. However, these aids may become deformed during installation and my thus not be suitable to be used again, e.g. when replacing the rotor blade, which may make an exchange of the rotor blade more difficult.

Service operations inside the blade may be performed with the blade positioned in a horizontal direction, allowing technicians to access the space inside the rotor blade. A horizontal position is also chosen for safety reasons, as a vertically positioned blade could have an internal cavity extending downward for 50 meters or more, creating a significant fall hazard.

Additionally, for personal safety reasons, individuals working on the wind turbine are not permitted to handle weights exceeding a certain limit. Some components or parts of components of the wind turbine that need to be replaced comprise a weight above this limit. If these components are not easily accessible, it is difficult or not possible to replace these components or parts of components of the wind turbine. It is thus desirable to avoid these negative effects and to improve the servicing or maintenance of wind turbines.

### SUMMARY

Accordingly, there is a need to mitigate at least some of the drawbacks mentioned above, in particular to improve the servicing or maintenance of wind turbines.

This need is met by the features of the independent claims. The dependent claims describe embodiments of the invention.

According to an aspect of the invention, a method of servicing a component of a wind turbine is provided. The component is located in a space that is at least partly confined by a rotor blade of the wind turbine. The method comprises bringing the rotor blade into a vertical position in which the rotor blade is pointing upwards by rotating a rotor hub of the wind turbine; transporting a crane through an opening in a separation wall between the hub and the space; positioning the crane on the separation wall; and servicing the component using the crane.

By bringing the rotor blade into a vertical position pointing upwards, it may be possible to transport equipment or parts needed for servicing the component through the opening of the separation wall into the space in a vertical direction. Consequently, this may allow the use of a crane mounted on the separation wall in order to transport the equipment or parts. Accordingly, heavier parts, which may exceed the weight lifting limits for the service personnel working on the wind turbine, may be transported out of or into the space by using the crane. As a result, servicing the component may be realized in a safe and more time-efficient manner. The method may allow service personnel to service the component while complying with safety regulations. Furthermore, by using a crane that can be mounted on the separation wall, it may be possible to arrange the crane in any desired position and/or configuration on the separation wall. Thus, this may allow a flexible deployment of the crane when servicing the component.

For example, the rotor blade may extend in a longitudinal direction, e.g. in a spanwise direction between a root end and a tip end of the rotor blade. In the vertical position of the rotor blade, the longitudinal direction of the rotor blade may be substantially parallel to the vertical direction. Substantially parallel may mean that the maximum angular deviation between the longitudinal direction and the vertical direction may be less than 15 degrees, preferably less than 10, 5, or 2.5 degrees. That the rotor blade is pointing upwards may mean that a root end of the rotor blade faces ground and a tip end of the rotor blade faces the sky.

Positioning the crane on the separation wall may comprise mounting the crane on or to the separation wall.

The space may be internal to the rotor blade; it may be enclosed by the rotor blade and the hub, in particular by the separation wall which may form part of the hub.

In an embodiment, the component comprises or is an alignment structure configured to provide alignment of a rotor blade of the wind turbine during installation, in particular a mandrel.

Providing an alignment structure on the hub may help the alignment of the rotor blade with the hub during installation. The alignment structure, for example a mandrel, may have a weight ranging from about 100 kg to 500 kg, depending on several factors such as the blade length, blade diameter or used material. Thus, it may be very challenging to service such alignment structure or components of the alignment structure as it may exceed a weight limit individuals working on the wind turbine are permitted to handle. By using a crane, it may be possible to transfer such heavy alignment structure without interference with safety requirements.

In an embodiment, the crane comprises a gantry crane, wherein preferably, the gantry crane comprises a hoist.

Using a gantry crane may allow to lift heavy loads, which may not be moved manually. Depending on the design, a small gantry crane may be able to handle weights of up to 100 kilograms. Consequently, it may be configured to transport the component or parts of the components. Unlike fixed overhead cranes, gantry cranes may be transportable. This means they may be transported into the space and may be placed at any position on the separation wall. Consequently, using a gantry crane may provide a flexible solution. By mechanizing heavy lifting, using a gantry crane may significantly reduce the risk of injuries associated with manual handling of a large or heavy component. In addition, the controlled movement of the gantry crane may minimize the potential for accidents. By including a hoist, precise vertical movement and positioning of heavy components may be possible. This may be beneficial for servicing the component, which may require an accurate placement of the component.

In an example, the method comprises transferring, by the crane, the component or parts of the component through the opening by attaching the components or parts of the component to the hoist and lowering the components or parts of the component from the space through the opening into the hub.

The method may further comprise transferring the component or parts of the component from the hub by using another crane that is arranged inside the hub or that reaches into the hub. Thereby, the component or parts of the component may be removed from the wind turbine.

In an embodiment, the separation wall comprises a plate of a blade bearing of the rotor blade, in particular at least one blade bearing reinforcement plate.

A reinforcement plate of a blade bearing may be capable of bearing a high load exerted in vertical direction. Accordingly, it may be possible to arrange the crane on such a plate without damaging the plate. Furthermore, it may be possible to arrange additional equipment or parts needed for servicing the component on the plate without damaging the plate. The blade bearing reinforcement plate is typically located at the a bearing housing where a root of the rotor blade connects to the bearing. Its purpose is to reinforce the bearing as the bearing experiences significant mechanical stresses and loads. Accordingly, the plate may be configured to sustain high loads. Furthermore, it may be possible to service other components at the base of the rotor blade by using the crane.

In an embodiment, the opening of the separation wall is a manhole arranged in the plate of the blade bearing of the rotor blade. A manhole arranged in the plate of the blade bearing may provide direct access for service personnel into the space in which the component is located.

In an embodiment, the crane comprises individual components, wherein the individual components of the crane are transported through the opening piece by piece, and wherein the method further comprises assembling the individual components of the crane on the separation wall.

By using a crane that comprises individual components it may be possible to transport the crane more easily through the opening, also if it is narrow. The individual components of the crane may be lighter; each component of the crane may weigh less than 25 or 21 kg. Thus, transporting the individual components of the crane through the opening may be facilitated. Limits for weights that personnel working on the wind turbine are permitted to handle may not be exceeded. Consequently, this may allow transport of the crane components via the personnel servicing the component of the wind turbine. As a consequence, a safer and more flexible setup may be obtained.

In an embodiment, before the rotor blade is brought into the vertical position, the method further comprises bringing the rotor blade into a horizontal position in which the rotor blade points sideways in a horizontal direction by rotating the rotor hub of the wind turbine, the method further comprises providing the opening in the separation wall and attaching a personal safety device to the component or to an attachment point within the space.

When pointing sideways, the rotor blade may point into a horizontal direction or may have a horizontal orientation. For example, in the horizontal position of the rotor blade, the longitudinal direction of the rotor blade may be substantially parallel to the horizontal direction (i.e. the absolute horizontal direction with respect to earth). Substantially parallel may mean that the maximum angular deviation between the longitudinal direction and the horizontal direction may be less than 15 degrees, preferably less than 10, 5, or 2.5 degrees. That the rotor blade is pointing sideways may mean that a tip end and a root end of the rotor blade point in horizontal direction.

In the horizontal position of the rotor blade, there is no need to climb up a ladder in order to access the opening in the separation wall compared to the vertical position of the rotor blade. Therefore, it may be possible to open the manhole and attach the lanyard more easily. Furthermore, by bringing the rotor blade into a horizontal position it may be possible to provide and access the opening in the separation wall without using a personal safety device. Additionally, it may be easier to attach such a personal safety device to the component or to the attachment point when the rotor blade of the wind turbine is brought into the horizontal position after providing the opening.

In an embodiment, the personal safety device comprises a fall protection lanyard, wherein preferably, it further comprises a fall protection harness and the fall protection harness is attached to the fall protection lanyard before or after bringing the rotor blade into the vertical position.

In an embodiment, the method further comprises mounting a safety cover onto the opening, wherein preferably the safety cover comprises a foldable cover.

Mounting a safety cover onto the opening may eliminate the risk of falling through the opening when service personnel is standing on the separation wall in the vertical position of the rotor blade. Thereby, potential accidents and associated injury risks may be reduced significantly. The cover may provide a load-bearing surface capable of supporting accidental human loads, creating a temporary protective barrier over the opening that prevents inadvertent falls. Providing a foldable cover may allow fitting the cover through the opening so that it can be placed on the opening from within the space.

In an example, the safety cover may be mounted onto the opening after transporting the crane through the opening and/or during the positioning of the crane.

In an embodiment, servicing the component using the crane comprises unmounting the component and/or disassembling the component into parts and transporting the component or the parts of the component through the opening into the hub of the wind turbine by using the crane.

Disassembling the component into parts may comprise disassembling the complete component into parts or disassembling (only) damaged parts of the component.

In an example, servicing the component may further comprise transporting the disassembled component or parts of the component from the hub of the wind turbine by using an additional crane.

In an example, the component comprises a mandrel. The mandrel may be disassembled into parts and subsequently, the parts may be transported through the opening by using the crane. The parts of the component, in particular of the mandrel, may comprise a weight below 100 kg, preferably below 80 kg, more preferably below 70 kg. Some of the parts of the component may comprise a weight that exceed the weight lifting limits for the individuals working on the wind turbine. Thus, by using the crane, it may be possible to transport the heavy parts of the component through the opening.

In an embodiment, servicing the component using the crane further comprises transporting a replacement component or replacement parts of the component from the hub through the opening by using the crane and mounting the replacement component and/or assembling the replacement parts of the component to replace the unmounted component (20) or the disassembled parts of the component (20), respectively.

In an example, servicing the component by using the crane may further comprise transporting tools needed for servicing the component into the space.

In an embodiment, the method further comprises, after servicing the component, disassembling the crane by dismounting individual components of the crane and transporting the individual components of the crane piece by piece through the opening. As mentioned above, this may facilitate transport of the crane while observing the limits for weight allowed to be lifted by service personnel.

In an embodiment, after transporting the components of the crane through the opening, the method further comprises bringing the rotor blade into a horizontal position pointing sideways by rotating a rotor hub of the wind turbine, detaching a personal safety device from the component or from an attachment point within the space; and closing the opening in the separation wall.

In an example, the method further comprises detaching the personal safety device from the component when the rotor blade is in the horizontal position. In case the personal safety device comprises a lanyard and a harness, the lanyard may be detached from the component or the attachment point in the horizontal position.

In an embodiment, the method comprises arranging a ladder in the hub to reach through the opening into the space (when the rotor blade is in the vertical position), wherein preferably, the ladder comprises a telescopic ladder. For large wind turbines, the height of the access opening in the separation wall may be located several meters above a floor in the hub so that by arranging the ladder in the hub, a safe and efficient means of entry to the space may be provided. Furthermore, a telescopic ladder may be configured to collapse into a compact size, making it easy to store and transport especially in the confined environment of a wind turbine hub or blade.

According to an aspect of the invention a wind turbine is provided. The wind turbine comprises a hub; a rotor blade mounted to the hub; a separation wall between the hub and a space at least partly confined by the rotor blade; and a component of the wind turbine located in the space. The rotor blade may be provided in a vertical position pointing upwards, wherein the wind turbine further comprises a crane arranged in the space and on the separation wall. The crane is configured to be transportable through an opening in the separation wall.

In an example, the crane is assembled from multiple parts, wherein the parts of the crane are configured to fit through the opening in the separation wall.

In an example, the crane is configured to transport the component or part of the component through the opening in the separation wall.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a flow diagram illustrating a method of servicing a component of a wind turbine according to an embodiment.
Fig. 2 is a schematic drawing showing a wind turbine according to an embodiment.
Fig. 3 is a schematic drawing of a component of a rotor blade of a wind turbine according to an embodiment.
Fig. 4 is a schematic drawing showing a separation wall of a hub of a wind turbine according to an embodiment.
Fig. 5 is a schematic drawing showing a ladder extending through a manhole in a separation wall inside a hub of a wind turbine according to an embodiment.
Fig. 6 is a schematic drawing illustrating a servicing of a component of a wind turbine according to an embodiment, wherein the rotor blade is not shown.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

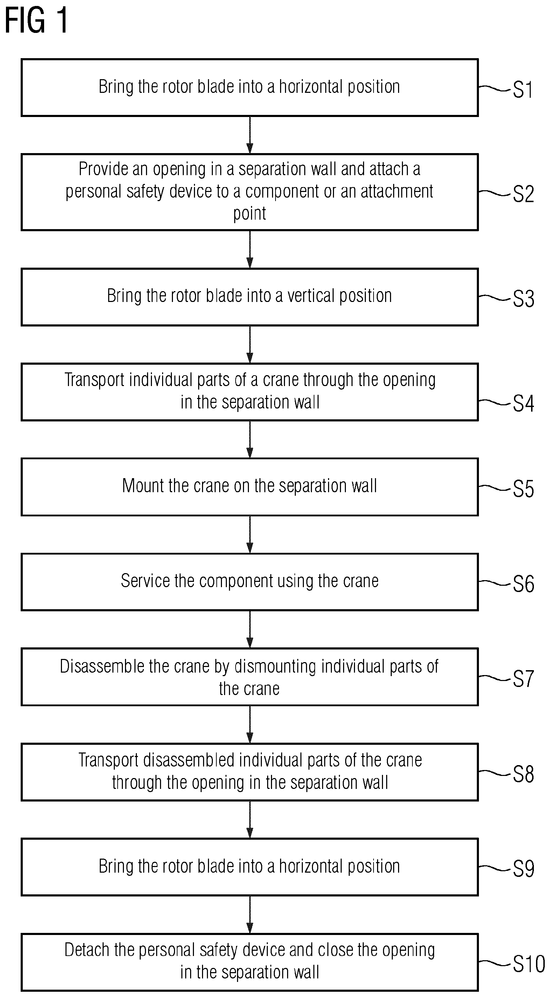

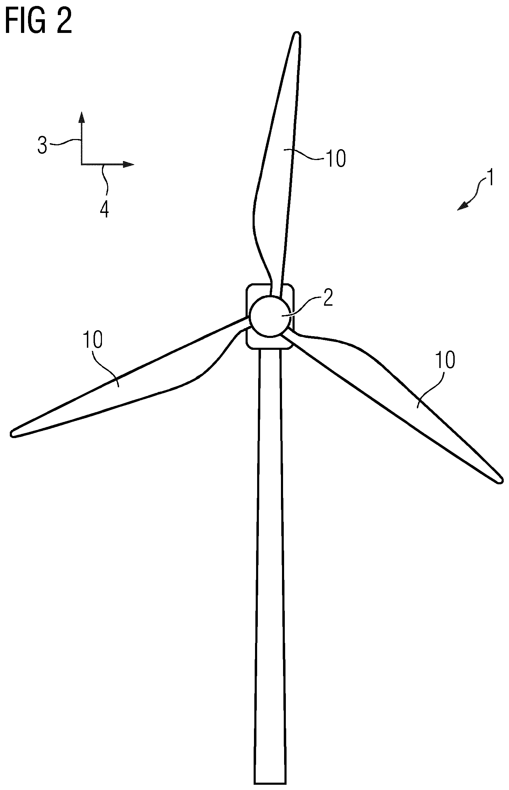

Fig. 1 shows a flow diagram of a method of servicing a component 20 of a wind turbine 1. In a first step S1, the rotor blade of the wind turbine may be brought into a horizontal position pointing sideways by rotating a rotor hub of the wind turbine. As shown in Fig. 2, the wind turbine 1 may comprise three rotor blades 10 that are connected to the rotor hub 2 of the wind turbine 1. The rotor blade 10 in which a component 20 of the wind turbine is to be serviced is brought into the horizontal position. In Fig. 2, the vertical direction 3 and the horizontal direction 4 are indicated. In the horizontal position, the longitudinal direction of the rotor blade is substantially parallel to the horizontal direction 4.

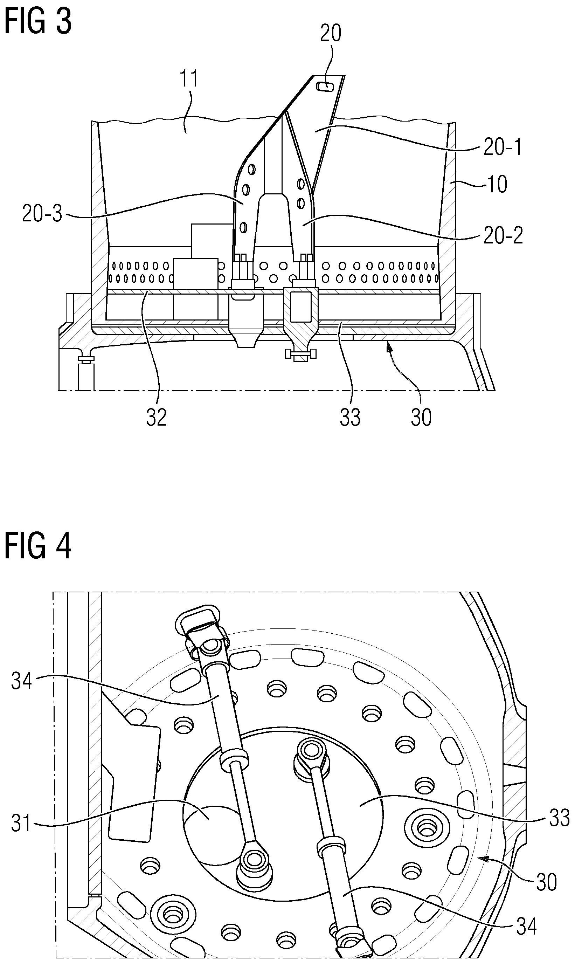

As can be seen in Fig. 3, the component 20 may located in a space 11 that is at least partly confined by the rotor blade 10 of the wind turbine 1. Furthermore, the component 20 of the wind turbine 1 may be arranged on a separation wall 30. In an embodiment, the component 20 comprises or is an alignment structure configured to provide alignment of a rotor blade 10 of the wind turbine 1 during installation. In the example of Fig. 3, the component 20 of the wind turbine 1 comprises a mandrel. The mandrel may comprise a plurality of parts 20-1, 20-2, 20-3 that may be detachable from one another.

The mandrel may be attached to the hub 2, in particular to a reinforcement plate 32 of the blade bearing 33, and may extend outwards from the plate 32 of the blade bearing 33. In the example of Fig. 3, the separation wall 30 comprises plates of a slewing ring bearing. In a slewing ring bearing, there are usually two rings: an inner ring and an outer ring . These rings may serve as the main contact surfaces for the rolling elements of the bearing (balls or rollers), and are designed to bear the rotational and axial loads transferred from the wind turbine blade 10 to the hub 2. The inner ring may be reinforced by mounting one or two plates thereto, for example the (outer) reinforcement plate 32 and the inner reinforcement plate 33. When the rotor blade 10 is brought close to the hub 2 during installation (by a respective crane), the mandrel may guide the rotor blade 10 so that the rotor blade may be aligned with the mounting position at the rotor hub 2. As a result, the installation of the rotor blade 10 may be simplified. Thus, a 'blade landing system' may be provided by the mandrel. The installation procedure may result in a deformation of and/or damage to the mandrel. Accordingly, there may be a need to service the deformed and/or damaged mandrel.

The alignment structure, e.g. the mandrel, may have a weight ranging for example from about 100 kg to 500 kg, depending on several factors such as the blade length, blade diameter or used material. Thus, it may be very challenging to service such alignment structure or components of the alignment structure as it may have a weight that exceeds a limit individuals working on the wind turbine are permitted to handle. The solution disclosed herein nevertheless allows servicing of such component while adhering to the safety requirements.

Returning to Fig. 1, in a second step S2, an opening 31 in a separation wall 30 is provided. The separation wall 30 may comprise a plate of a bearing of the rotor blade 10. In particular, the separation wall may comprise at least one blade bearing reinforcement plate. The blade bearing reinforcement plate can be seen in Fig. 4. As can be seen a pitching mechanism represented in the present example by two hydraulic cylinders 34 may be attached to the separation wall 30, in particular to the inner plate 33 and outer plate 32 of the blade bearing. The plates 32, 33 transfer the torque applied by the pitching mechanism to the inner ring of the blade bearing, to which the blade 10 is mounted, in order to allow pitching of the rotor blade 10.

Furthermore, it can be seen that the inner and outer plates 32, 33 of the blade bearing comprise an opening 31, in particular a manhole that may be opened in step S2 after the rotor blade 10 has been brought into the horizontal position. Step S2 further comprises attaching a personal safety device to the component or an attachment point. The personal safety device may for example comprise a lanyard and a harness. When the rotor blade of the wind turbine is in the horizontal position, the lanyard may be attached to the component or the attachment point by reaching through the opening provided in the separation wall. As the rotor blade is in the horizontal position, this is possible without the need for the service personnel to climb up a ladder or the like, so that the attachment can be made while the service personnel is not secured.

In the next step S3, the rotor blade 10 is brought into a vertical position pointing upwards by rotating the rotor hub of the wind turbine. Such a vertical position of the rotor blade is shown in Fig. 2 by the upward pointing blade. In the vertical position of the rotor blade, the longitudinal direction of the rotor blade is substantially parallel to the vertical direction 3.

The next step S4, the method of Fig. 1 comprises transporting individual parts of a crane 50 through the opening 31 provided in the separation wall 30. By using a crane 50 that comprises several parts, the crane 50 can more easily be transported through the opening 30. As a result, the crane 50 is suitable for setups where only a narrow opening 31 is provided in the separation wall 30. The individual parts of the crane 50 may be lighter than the weight of the installed crane 50.

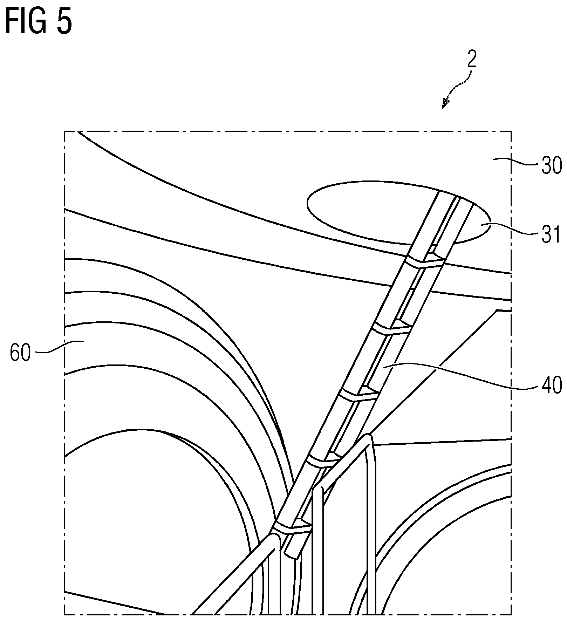

The individual components of the crane 50 may be transported manually through the opening 31 of the separation wall by using a ladder 40. Fig. 5 shows the inside of the rotor hub 2 of the wind turbine 1. In Fig. 5, an access opening 60 is visible which leads through a generator into the nacelle. The access opening 60 may be used to transport the component or parts of the component out of the hub, as described further below. Furthermore, a ladder can be arranged in the rotor hub of the wind turbine to reach through the opening 31 in the separation wall 30. The opening 31 may provide a position against which the ladder 40 may be leaned. The ladder 40 in Fig. 5 comprises a telescopic ladder. A telescopic ladder may be extended to various lengths, making it versatile for different required heights. Furthermore, a telescopic ladder may be configured to collapse into a compact size, making it easy to store and transport especially in the confined environment of a wind turbine hub 2 or blade 10.

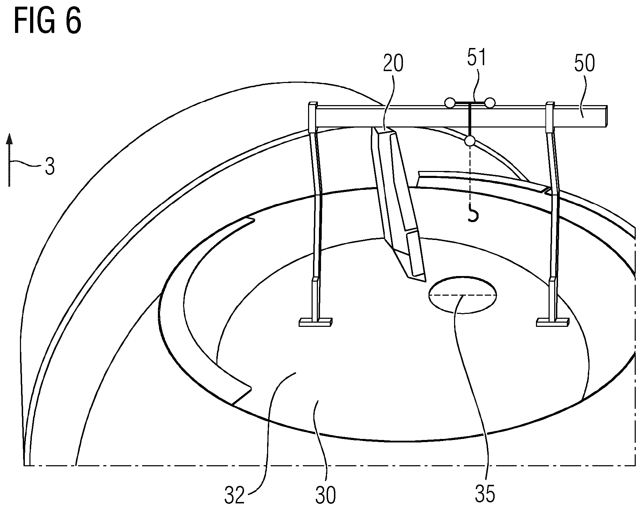

Coming back to Fig. 1, in the next step S5, the individual components of the crane 50 are assembled on the separation wall 30. This is shown in Fig. 6, in which the assembled crane 50 is positioned on the separation wall 30. As can be seen in Fig. 6, the opening 31 in the separation wall 30 is covered by a safety cover 35 mounted onto the opening 31. The safety cover 35 of Fig. 6 comprises a foldable cover. Crane 50 may be a gantry crane having a hoist 51, which may run on a beam and allow positioning of the load above opening 31. As the rotor blade (not shown in Fig. 6) is oriented in the vertical direction 3, the separation wall, e.g. the reinforcement plate 32, may be oriented substantially horizontally. Accordingly, the crane 50 can safely be positioned on the separation wall without the danger of sliding towards a side, even without securing the crane to the separation wall. To improve safety, the crane may be fixed to the separation wall, e.g. bolted to the separation wall; this is however not necessary.

In the next step S6 of Fig. 1, the component 20 may be serviced by using the crane. This may include unmounting the component and/or disassembling the component 20 into parts. By disassembling the component 20 into parts, the disassembled parts may be lighter than the assembled component. The disassembled parts of the component may have a weight below 100 kg, preferably below 80 kg, more preferably below 70 kg. Step S5 may further include that the disassembled component 20 or parts of the component 20 are transported through the opening 31 of the separation wall 30 and into the hub 2 by using the crane. The crane 50 may comprise a gantry crane and a hoist 51. The dismounted component 20 or parts of the component 20 may be transported, in particular lowered, through the opening 31 by using the hoist 51 of the gantry crane.

From the hub, the dismounted component 20 or parts of the component may then be further transported out of the hub 2 by using an additional crane. Furthermore, from the hub 2 a replacement component 20 or replacement parts of the component 20 may be transferred through the opening and into the space 11 by using the crane 50.

In the method, equipment and tools needed for servicing the component 20 may likewise be transferred through the opening 31 by using the crane 50.

The replacement component 20 or parts of the component 20 may be assembled in order to restore the original state of the component 20. Original state of the component may relate to an undeformed and/or undamaged component 20. After the original state of the component 20 is restored, the servicing of the component 20 may be finished.

After the service of the component 20 is finished, in the next step S7 of Fig.1 the crane 50 is disassembled by dismounting the individual components of the crane 50.

The disassembled components are then be transported through the opening 31 in the separation wall 30 into the hub 2 of the wind turbine 1 in the next step S8 of Fig. 1.

In step S9, the wind turbine is brought into the horizontal position pointing sideways by rotating the rotor hub 2 of the wind turbine, similar to step S1.

In step S10, the personal safety device is detached from the component 20 or the attachment point. If the personal safety device comprises a lanyard and a harness, the harness may be detached from the lanyard in the vertical position of the rotor blade and the lanyard may be detached from the component 20 or the attachment point in the horizontal position of the rotor blade. Furthermore, in step S10, the opening 31 in the separation wall 30 may be closed, e.g. by mounting a respective cover to the opening. Thus, the wind turbine 1 may be brought into its initial state and may be ready to operate normally again.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of servicing a component of a wind turbine (1), wherein the component (20) is located in a space (11) that is at least partly confined by a rotor blade (10) of the wind turbine (1), wherein the method comprises:
bringing the rotor blade (10) into a vertical position pointing upwards by rotating a rotor hub (2) of the wind turbine (1);
transporting a crane (50) through an opening (31) in a separation wall (30) between the hub (2) and the space (11);
positioning the crane (50) on the separation wall (30); and
servicing the component (20) using the crane (50).

2. The method according to claim 1, wherein the component (20) comprises or is an alignment structure configured to provide alignment of the rotor blade (10) of the wind turbine (1) during installation, in particular a mandrel.

3. The method according to claim 1 or 2, wherein the crane (50) comprises a gantry crane, wherein preferably, the gantry crane comprises a hoist.

4. The method according to any of the preceding claims, wherein the separation wall (30) comprises a plate of a blade bearing of the rotor blade (10), in particular at least one blade bearing reinforcement plate (32).

5. The method according to claim 4, wherein the opening (31) of the separation wall (30) is a manhole arranged in the plate of the blade bearing of the rotor blade.

6. The method according to any of the preceding claims, wherein the crane (50) comprises individual components, wherein the individual components of the crane (50) are transported through the opening (31) piece by piece, and wherein the method further comprises assembling the individual components of the crane (50) on the separation wall (30).

7. The method according to any of the preceding claims, wherein before the rotor blade (10) is brought into the vertical position, the method further comprises:
bringing the rotor blade (10) into a horizontal position in which the rotor blade (10) points sideways in a horizontal direction by rotating the rotor hub (2) of the wind turbine (1);
providing the opening (31) in the separation wall (30);
attaching a personal safety device to the component (20) or to an attachment point within the space (11).

8. The method according to claim 7, wherein the personal safety device comprises a fall protection lanyard, wherein preferably, it further comprises a fall protection harness and the fall protection harness is attached to the fall protection lanyard after bringing the rotor blade (10) into the vertical position.

9. The method according to any of the preceding claims, wherein the method further comprises:
mounting a safety cover (35) onto the opening (30), wherein preferably the safety cover (35) comprises a foldable cover.

10. The method according to any of the preceding claims, wherein servicing the component (20) using the crane (50) comprises:
unmounting the component (20) and/or disassembling the component (20) into parts;
transporting the component (20) or the parts of the component (20) through the opening (31) into the hub (3) of the wind turbine (1) by using the crane (50).

11. The method according to claim 10, wherein servicing the component (20) using the crane (50) further comprises:
transporting a replacement component or replacement parts of the component from the hub (2) through the opening (30) by using the crane (50);
mounting the replacement component and/or assembling the replacement parts of the component to replace the unmounted component (20) or the disassembled parts of the component (20), respectively.

12. The method according to any of the preceding claims, wherein the method further comprises:
disassembling the crane (50) by dismounting individual components of the crane (50);
transporting the individual components of the crane (50) piece by piece through the opening (31).

13. The method according to claim 12, wherein after transporting the components of the crane (50) through the opening (31), the method further comprises:
bringing the rotor blade (10) into a horizontal position pointing sideways by rotating a rotor hub (3) of the wind turbine (1);
detaching a personal safety device from the component (20) or from an attachment point within the space (11); and
closing the opening (31) in the separation wall (30).

14. The method according to any of the preceding claims, wherein the method comprises arranging a ladder (40) in the hub (3) to reach through the opening (31) into the space (11), wherein preferably, the ladder (40) comprises a telescopic ladder.

15. A wind turbine, wherein the wind turbine comprises:
a hub (2);
a rotor blade (10) mounted to the hub (2);
a separation wall (30) between the hub (2) and a space (11) at least partly confined by the rotor blade (10);
a component (20) of the wind turbine (1) located in the space (11);
wherein the rotor blade (10) is in a vertical position pointing upwards,
wherein the wind turbine (1) further comprises a crane (50) arranged in the space (11) and on the separation wall (30), wherein the crane (50) is configured to be transportable through an opening (31) in the separation wall (30).
